(19) Europäisches Patentamt
European Patent Office
Office européen des brevets

(11) Publication number: **0 077 126 A2**

# (12) EUROPEAN PATENT APPLICATION

(21) Application number: 82304688.3

(22) Date of filing: 07.09.82

(51) Int. Cl.³: G 01 D 11/30, G 12 B 9/10

(30) Priority: 23.09.81 GB 8128773

(43) Date of publication of application: 20.04.83 Bulletin 83/16

(84) Designated Contracting States: DE FR IT

(71) Applicant: NATIONAL RESEARCH DEVELOPMENT CORPORATION, 101 Newington Causeway, London SE1 6BU (GB)

(72) Inventor: Shanks, Ian Alexander, 56 The Bury, Pavenham Bedford Bedfordshire (GB)

(74) Representative: Edwards, John Brian et al, Procurement Executive Ministry of Defence Patents 1 A (4), Room 2014 Empress State Building Lillie Road, London SW6 1TR (GB)

## (54) A meter panel.

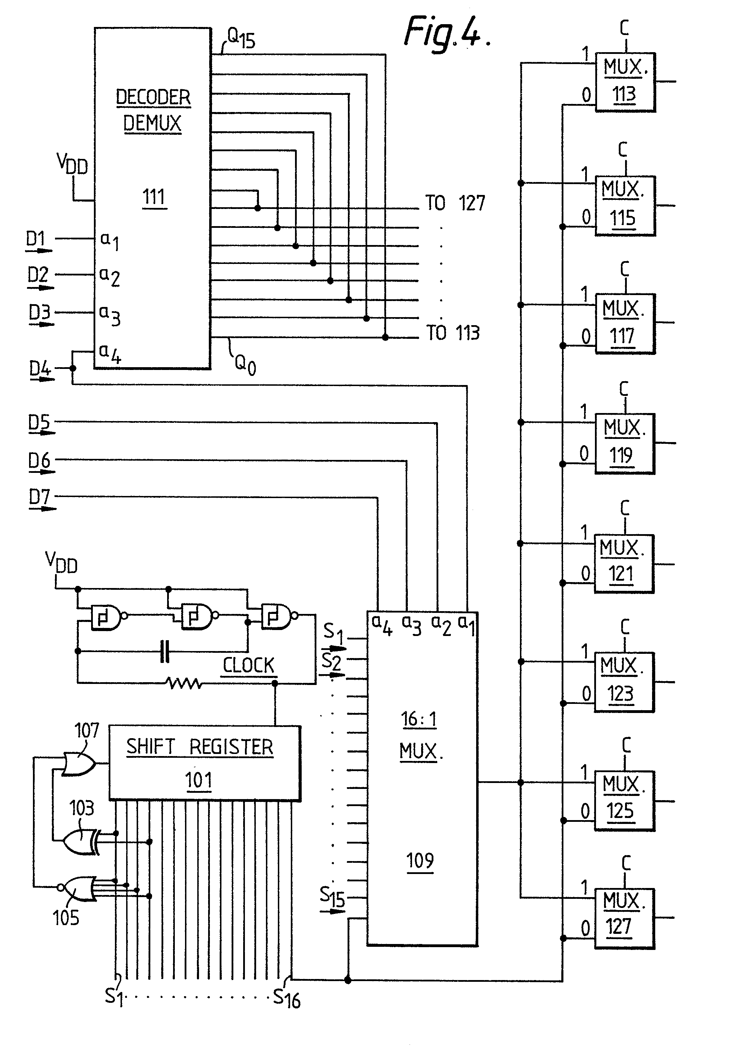

(57) A meter panel, for a car dashboard or the like, comprising two electrode bearing plates (5, 7) placed each side of an electro-optic medium (3) — a liquid crystal, a luminescent solid, or a rarified gas. The plate electrodes (9, 11) are arranged in register opposite one another and define by their overlap a number of meters (15A and B; 17A and B). The electrodes (11) an one plate (7) are interconnected from meter (15B) to adjacent meter (17B). The panel is connected to a signals source (fig. 4) and isogonal signals are applied to the electrodes (11) common to each meter. For each meter one of these signals is selected and also applied to one of the opposite electrodes (9). A signal isogonal to the applied signals is simultaneously applied to the remaining electrodes. The panel medium is thus driven ON except at regions where the registered electrodes have like signals applied. These regions appear in contrast against the background, to give index display.

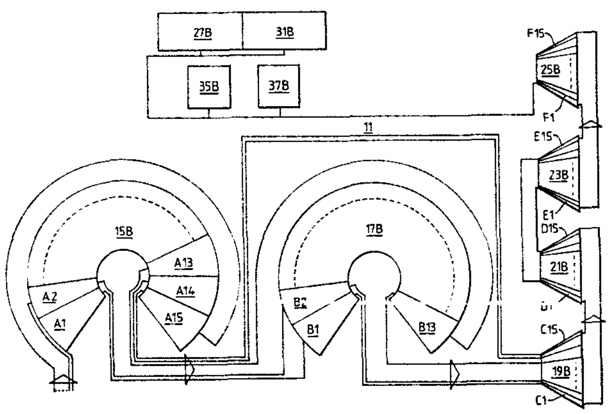


EP 0 077 126 A2

SPECIFICATION

A Meter Panel

TECHNICAL FIELD

The present invention concerns a meter panel, a panel incorporating a plurality of meters arranged adjacent to one another for the concurrent display of the measured value of different measureables. In particular, although not exclusively, the invention is directed to the construction of vehicle dashboard panels, aircraft instrument panels, system monitor panels and the like.

BACKGROUND ART

A typical vehicle dashboard panel incorporates a speedometer, a tachometer and various other meters for indicating the state of battery charge, petrol level, oil pressure, water temperature, etc. Each meter is of individual construction and is driven either by direct mechanical coupling to the engine transmission, or electro mechanically in response to sender unit signals. It is a disadvantage in panels of this type that as each meter incorporates a number of moving parts, these are subject to wear, and meter response is often slow due to the mechanical inertia of these parts and the response may also exhibit overshoot. The meter movements may also be expensive and difficult to make both sensitive and robust.

Recently, consideration has been given to the replacement of mechanical meters by electro-optic display meters eg by vacuum fluorescent devices, electro-luminescent devices, liquid crystal devices and the like. Since each meter of this type can be constructed in flat panel form, it would clearly be an advantage if each meter were incorporated in a single integral panel construction. Each meter, however, will include many electrodes requiring electrical address, but the number of connections to the panel would be limited by requirement for high reliability and yield. The problem is to meet these requirements.

There is described in UK Patent Application GB2044975A a single meter display panel of non-mechanical construction. This panel, as described, displays the value of a measurable by the position of one, two or three selected indices. The panel includes two sets of electrodes, one either side of an electrically sensitive medium eg a liquid crystal layer, the electrodes of one set configured and overlapping electrodes of the facing set to define a number of selectable index positions. Index indication of measured value is given when suitable address is applied to the electrodes, the one, two or three regions of the medium corresponding to selected index position being driven into an OFF state to contrast with all other regions of the medium which are driven in an alternative ON state. Pseudo-random sequence binary code signals are described as the preferred form of address.

DISCLOSURE OF THE INVENTION

The invention is intended to provide a robust flat panel display incorporating two or more non-mechanical meters, the panel including but a relatively small number of input connections for the purpose of applying address to the meters.

In accordance with the invention there is provided an analogue display panel formed of two support plates, one each side of an electrically responsive medium, this medium being capable of being driven upon appropriate electrical address between two different optical states co-existent in different regions thereof; each plate bearing electrodes adjacent to the medium with facing electrodes overlapping to define a plurality of individual meter display areas; wherein on one plate the electrodes of the adjacent display areas are coextensive thus enabling a common fixed address of several signals to be applied to each meter.

There is also provided an analogue display assembly comprising the combination of the panel above and drive electronic circuitry as follows:-

A signals source for providing a set of differing cyclic drive signals, connected to the electrodes on the one plate to apply a number of the signals thereto, a different signal to each electrode;

a first selector, responsive to input data, connected to the signals source to select the signals to be applied to the electrodes on the other plate, in particular to select for each meter display, one of the number of signals; and

a second selector, responsive to input data, connected to the signals source, the first selector, and the electrodes on this other plate, to select for each meter display one of these electrodes and to apply to this one electrode the signal selected therefor, and to apply to the remaining electrodes of each meter display a signal different to the other signals, to drive the medium OFF at selected positions and ON elsewhere.

When input data is applied to the operating assembly, an index character appears at a selected position on each meter. These positions are defined by the overlap of selected electrodes and facing electrodes to which like signals are applied. The regions of the medium between these electrodes are maintained in one optical state, the OFF state. Since different signals are applied to all other facing electrodes, the regions of the medium between these are maintained in another optical state, the ON state.

The display panel may be in the form of a liquid crystal cell wherein the medium is of liquid crystal material. This form of panel may include one or more polarisers and may be adapted as a twisted nematic (Schadt-Helfrich) cell in which a thin layer of nematic liquid crystal material is contained between transparent electrode bearing glass plates, the latter being treated by unidirectional rubbing and assembled with the directions of rubbing orthogonal or twisted to give a twisted alignment of the liquid crystal molecules of the layer. However, the electrode bearing plates may be treated in other known manners such as by oblique evaporation of dielectric material eg SiO or $MgF_2$, to facilitate alignment. Small amounts of cholesteric material (typically 1%) may be added to the nematic liquid crystal material to prevent display non-uniformity. For further discussion of this see UK Patent Serial Numbers 1,472,247 and 1,478,592; and also small amounts of dichroic dye may be added to give a coloured display and allow one or both polarisers to be omitted, as known in the art. The twist angle in such a cell may be zero. Alternatively this form of panel may be adapted as a cholesteric-to-nematic phase change cell including a thin layer of cholesteric material which is characterised by two phase states; one, OFF state wherein the material in the focal conic texture has the property of scattering incident light; the other, the ON state, wherein the material molecules are aligned by the electric field into the nematic phase and enable the transmission of incident light through the layer. A small amount of dichroic dye may be added to the liquid crystal material to enhance contrast and viewability. In this case

the OFF state may alternatively be the (non scattering) planar texture of the cholesteric.

The display panel may be an AC electro-luminescent display panel wherein the medium is in the form of a solid layer of electro-luminescent material. Alternatively the display panel may be a AC plasma discharge panel wherein the medium is a suitable gas.

The different cyclic drive signals may be alternating signals, or alternatively these signals may be uni-polar, that is cyclic signals having a DC component, provided the difference voltage of any two signals is an alternating voltage.

Preferably the cyclic drive signals are isogonal, and may be orthogonal.

A set of isogonal signals (Vj, j = 1, ..., N) has the following properties:-

(i) each repetitive signal has a period T, or a sub multiple of T for its repetition;

(ii) the voltage difference between any two signals is truly alternating in the period T,

$$\oint (Vi - Vj)\, dT = 0$$

The period T being of sufficiently short duration that the medium response to the RMS value of the voltage difference in each case, and irreversible electro-chemical decomposition effects are avoided;

(iii) the RMS voltage difference between any two signals is constant and not less than a minimum voltage (V MIN):-

$(Vi - Vj)_{RMS} \geqslant V\,MIN,\ i \neq j;\ i,j = 1,2 \ldots N.$

This minimum voltage being significantly greater than threshold Vt (ie V MIN > 1.5Vt).

To facilitate use of the display over an extended range of temperature, it is preferable that the finite RMS voltage difference in each case is somewhat greater than the saturation voltage V SAT at the mean operative temperature,

V MIN >1.1 V SAT

(The saturation voltage of the panel is that voltage difference applied across the medium that is required to change the relevant optical property (eg optical transmission) of the corresponding region by 90% of the full property change possible).

Conveniently, the set of signals may be a set of psuedo-random binary sequence signals, each of period T and divided into a plurality of L bits (L≥N) with each bit having a value logic "0" or "1", corresponding to two different levels of voltage. Alternatively the signals may be a set of suitable Walsh function signals.

BRIEF INTRODUCTION OF THE DRAWINGS

In the drawings accompanying this specification:-

Figure 1 is a cross section view of a liquid crystal display panel;

Figures 2 and 3 show, part in plan view and part in schematic, the electrode configurations of the front and back plates of the panel shown in the preceding figure;

Figure 4 is a circuit diagram showing the drive electronic circuitry used to address one of the meters of this panel.

DESCRIPTION OF THE PREFERRED CONSTRUCTION

An embodiment of the invention will now be described, by way of example only with reference to the accompanying drawings.

The meter panel shown in illustrative cross section in Figure 1 is in the form of a lecithin aligned dyed phase change display cell 1. incorporating a layer 3 of liquid crystal material. This material is of D82 E61 blue dye - nematic liquid crystal to which has been added approximately 3.9% by weight of CB15 cholesteric liquid crystal. The blue anthraquinone dichroic dye D82 is given by the structural formula:-

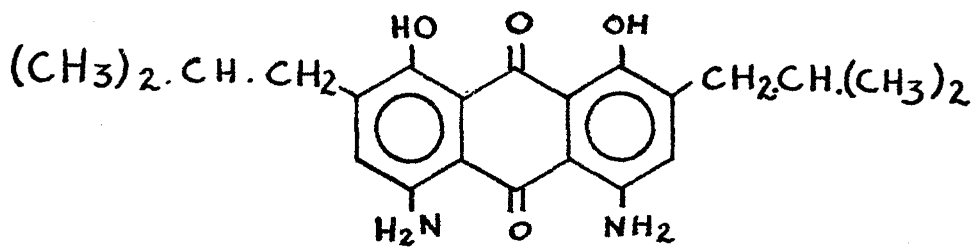

The dye 4,5-diamino-2,7-di-isobutyl-1,8-dihydroxy anthraquinone described in UK Patent Application No. GB 2,081,736 A. [The liquid crystal materials E61, CB15, the dye D82 and the dyed nematic material D82 E61 are listed in the trade catalogues of BDH Ltd Poole, Dorset, England].

The liquid crystal layer 3 is enclosed between two glass support plates 5 and 7 and is approximately 9 microns thick to give an acceptable threshold voltage characteristic of about 5 volts. The plates 5 and 7 are each 4 mm thick and have been coated with 30 Ω/□ indium tin oxide, and etched to give the required electrode configurations, individual electrodes being separated by small gaps about 50 micron wide, to provide adequate isolation from each other. The configurations of these electrodes, the front electrodes 9 and the back electrodes 11, are shown in Figures 2 and 3 respectively. The back plate 7 of the panel is backed by a white card reflector 13. This reflector 13 has been tinted slightly yellow to give a neutral gray colour appearance in the display background.

The front plate electrodes 9 shown in Figure 2 are configured to define six different meter display areas 15A-25A for speedometer 15A; tachometer 17A; battery meter 19A; oil 21A, temperature 23A, and fuel gauge 25A, meter display. In addition, the front plate electrodes 9 are also configured to define on/off indication display areas for brake 27A, ignition 29A, beam 31A and choke warning 33A, as also left/right traffic signal indication 35A, 37A. The front plate speedometer display area 15A is sub-divided into eight electrodes, and the tachometer display area 17A likewise. These electrodes are arranged in meander configuration to define open sector shaped areas 15A and 17A. A total of twenty-six isolated electrodes are thus provided on the front plate 9 to define all the meter and indicator display areas of the panel.

The back plate electrodes 11 shown in Figure 3 are likewise configured to define corresponding, complementary, meter areas 15B-25B, 27B (corresponding to 27A, 29A), 31B (corresponding to 31A, 33A), 35B and 37B. The electrodes are configured, so that as assembled, complementary meter areas 15A and 15B; 17A and 17B; etc, will lie in register, facing electrodes overlapping to define the individual meter and indicator displays. The back plate speedometer display area 15B is divided into fifteen isolated segments A1-A15 arranged in an open sector. The tachometer display area 17B is likewise divided into segments but thirteen in number, namely the segments B1-B13. Each of the remaining four meter display areas 19B-25B is divided into fifteen segments C1-C15, D1-D15, E1-E15 and F1-F15. Interconnective conductive material provides connection between the thirteen tachometer segments B1-B13 and thirteen of the speedometer segments A1-A13. Likewise conductive material provides connection between the battery charge gauge segments C1-C13, C14 and C15 and the tachometer electrode segments B1-B13 and remaining speedometer electrode segments A14 and A15. The back plate electrodes of the four gauge meters 19B-25B are connected in series by connective conductive material: C1-D15-E1-F15; C2,D14,E2, F14;...; C15,D1,E15,F1. One of the fifteen common back plate electrodes, the electrode A15-C15-D1-E15-F1, extends towards and connects the back

plate electrodes 27B, 31B, 35B and 37B of the indicator displays. Thus a total of fifteen input connections only is required to connect the back plate electrodes to the panel address, making the total number of panel input connections forty-one. This number may be compared to the number of connections that would ordinarily be required, thus for a meter panel having a common back plate electrode and individual electrodes on the front plate, the number of contacts required would be 1 + 120 + 100 + 15 + 15 + 15 + 15 + 6 = 287 in all. Alternatively, a meter panel similar to that described above but where the meter to meter interconnections are omitted, each meter being addressed individually by psuedo random binary sequence coded signals, the number of connections is eighty-nine. Thus as can be seen by this comparison, the number of connections for the example described is significantly smaller.

The meter panel is connected to address-circuitry for operation. A different coded signal is applied to each one of the fifteen back plate electrodes. For each meter one of these signals is selected and applied to a selected one of the corresponding front plate electrodes. Thus for each meter the same signal is applied to one of the back plate electrodes and to the selected front plate electrode with the result that a null RMS electric field is developed and the region of liquid crystal material between these electrodes is driven into and held in the "OFF" optical state. A sixteenth signal is applied to all remaining front plate electrodes and the remaining regions of the liquid crystal material that lie between the front and back plate electrodes are held in the "ON" optical state. Thus, at each meter, an index is displayed against a contrasting background.

The speedometer, as described, is defined by the overlap of eight front plate electrodes 17A and fifteen back plate electrodes 17B and thus provides 8 x 15 = 120 selectable index positions. A masking scale (not shown) is placed over the front support plate 5 and is calibrated so that the vehicle speed in the range 0-120 mph can be read with an accuracy of up to 1 mph.

The tachometer 19A/19B has one hundred and four selectable index positions. A rev count in the range 0-10,000 rpm may thus be read up to 100 rpm accuracy.

As shown in Figure 4 the twenty-six coded address signals required are generated by a clocked sixteen bit static shift register 101. These signals are provided at the sixteen outputs S1-S16 of the register and fifteen of these signals are applied to the fifteen back plate electrodes A1-A15. Feedback from the first and fourth register outputs S1 and S4 is provided via an exclusive OR gate 103 to give psuedo-random coding. To enable start-up operation, a NOR gate 105 is connected to the first four register outputs S1-S4 and both gates 103 and 105 are connected to the input of the register 101 via an OR gate 107.

Signal selection for the speedometer 17A/17B is provided by a 16:1 multiplexer 109. The signal inputs of this multiplexer 109 are each connected to an output of the register 101. One of the signals is selected according to the control address applied to the four control inputs a1-a4 of the multiplexer 109, this control address being provided from four binary data outputs D4-D7 of an engine speed sender unit (not shown).

Electrode selection for the speedometer 17A/17B is provided by a 16:1 decoder demultiplexer 111 and a bank of eight 2:1 multiplexers 113-127. The demultiplexer 111 has four control inputs a1-a4 and these are connected to three other binary data outputs D1-D3 and to the fourth data output D4 of the sender unit. The demultiplexer 111 has sixteen outputs Q0-Q15. Since the eight front plate electrodes 17A of the speedometer are arranged in meander configuration, they overlap adjacent back plate electrode segments A1 A2, A2 A3, etc in alternating order. To allow for this, the sixteen outputs Q0-Q15 of the demultiplexer are connected in mirror pairs Q0-Q15, Q1-Q14 etc. The paired outputs are then connected to the control input C of a corresponding one of the 2:1 multiplexers 113-127. Each 2:1 multiplexer 113-127 has two signal inputs, one of which is in each case

connected to the sixteenth output S16 of the register 101. The output of each 2:1 multiplexer 113-127 is connected to a corresponding one of the speedometer front plate electrodes 17A. In response to input data from the sender unit and under the control of the demultiplexer 111, the signal selected by the 16:1 multiplexer 109 is channelled to the output of one only of the 2:1 multiplexers 113-127. The signal from the sixteenth output S16 of the register 101 is channelled to the remaining seven multiplexer outputs.

As an alternative to the dyed phase change cell described above, the panel may instead be adapted as a crystal nematic device. However, care must, in this case, be taken to minimise electrode resistivity to avoid a substantial drop in signal voltage along each electrode, a possible cause of failure.

As an alternative to the use of a card reflector, the back plate electrodes may be arranged to function also as a reflector. In this case they may be made of thick roughened conducting material - eg silver - in which case a yellow dye may be dissolved in the D82 E61 liquid crystal material to give a neutral grey coloured background.

CLAIMS

1. An analogue display panel comprising two electrode bearing plates (5, 7) placed each side of an electrically responsive medium (3), characterised in that: the electrodes (9, 11) are of such configuration and arranged in register opposite one another to define by their overlap the display areas (15A and B; 17A and B; ...) of a plurality of meters; and wherein the electrodes (11) on one plate (7) are interconnected such that a common signal address shall be applied to all meters (15A and B; 17A and B; ...).

2. A panel as claimed in Claim 1 above, wherein: the electrodes (11) on the one plate (7) are configured as segments (A1 to A15; ...) for at least one (15A and B) of the meters (15A and B; 17A and B; ...); the electrodes (9) on the opposite plate (5) are arranged with several electrodes corresponding to each of the segments (A1 to A15); and, each electrode corresponding to any one segment (A1, A2 or A15) is connected to an electrode corresponding to each of the other segments (A2, ... A15 or A1) by a series of meander connections.

3. A panel as claimed in either Claims 1 or 2 above wherein the medium (3) is of dyed phase change liquid crystal material.

4. A panel as claimed in Claim 3 above wherein both support plates (5, 7) are transparent and the panel is backed by a diffuse reflector (13), the reflector (13) being dyed with a dye the colour compliment of the medium (3), to provide a background of neutral grey appearance.

5. A panel as claimed in Claim 3 above wherein the electrodes (11) on one plate (7) lie opposite a transparent support plate (5), and are of thick roughened conductive material together providing an effective reflecting surface; the liquid crystal material (3) including in addition to guest dye, another dye of complimentary colour, to provide a background of neutral gray appearance.

6. A panel as claimed in Claim 3 above wherein the liquid crystal material (3) includes as guest dye, the blue anthraquinone dye:

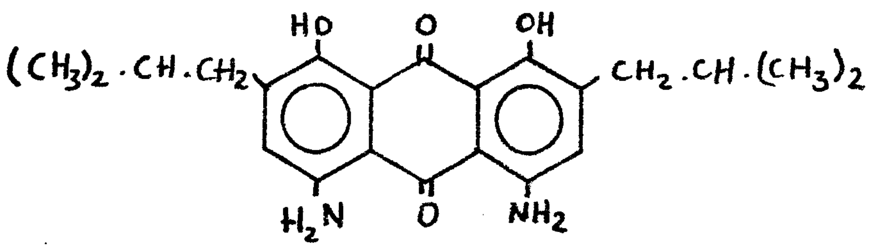

7. An analogue display panel assembly including in combination: a signals source (101) for providing a set of isogonal address signals, a signals selector (fig. 4) responsive to meter control data (D1 to D7), and a panel (fig. 1) comprising two electrode bearing plates (5, 7) placed each side of an electrically responsive medium (3) characterised in that: the electrodes (9, 11) are of such configuration and arranged in register opposite one another to define by their overlap the display areas (15A and B; 17A and B; ...) of a plurality of meters; and wherein the electrodes (11) on one plate (7) are interconnected such that a common signal address shall be applied to all meters (15A and B; 17A and B; ...); and wherein, the signals source (101) is connected to the electrodes (11) on the one plate (7) to apply isogonal address signals in common to each meter (15A and B; 17A and B) and the signals selector (fig. 4) is connected to the signals source (101) and to the electrodes (9) on the

opposite plate (5), to select for each meter (15A and B; 17A and B) a signal, one of the several applied in common to each meter (15A and B; 17A and B), and to apply each selected signal to an electrode (9) corresponding to each meter (15A and B; 17A and B), whilst at least one signal isogonal to the signals applied to the electrodes (11) on the one plate (7), is applied to the remaining electrodes (9) on the opposite plate (5).

8. An assembly as claimed in Claim 7 above wherein the signals source (101) provides a set of orthogonal address signals.

9. An assembly as claimed in Claim 8 above wherein the signals source (101) provides a set of pseudo-random binary sequence coded signals.

10. An assembly as claimed in any of the preceding Claims 7 to 9 wherein the finite RMS voltage difference between any two of the isogonal signals is somewhat greater than saturation voltage at mean operative temperature.

11. A vehicle instrument panel including in combination: a signals source (101) for providing a set of isogonal address signals, a signals selector (fig. 4) responsive to meter control data (D1 to D7), a panel (fig. 1) comprising two electrode bearing plates (5, 7) placed each side of an electrically responsive medium (3), and a vehicle speed sender unit; wherein the electrodes (9, 11) are of such configuration and arranged in register opposite one another to define by their overlap the display area of a speedometer (15A and B) and the display area of at least one other meter (17A and B); and wherein the electrodes (11) on one plate (7) are interconnected such that a common signal address shall be applied to all meters (15A and B; 17A and B; ...); and wherein, the signals source (101) is connected to the electrodes (11) on the one plate (7) to apply isogonal address signals in common to

each meter (15A and B; 17A and B), the signals selector (fig. 4) is connected to the signals source (101) and to the electrodes (9) on the opposite plate (5), to select for each meter (15A and B; 17A and B) a signal, one of the several applied in common to each meter (15A and B; 17A and B), and to apply each selected signal to an electrode (9) corresponding to each meter (15A and B; 17A and B), whilst at least one signal isogonal to the signals applied to the electrodes (11) on the one plate (7), is applied to the remaining electrodes (9) on the opposite plate (5); and, the vehicle speed sender unit is connected to the signals selector (fig. 4) to provide data to control the signal and electrode selection for the speedometer (15A and B).

12. A vehicle instrument panel as claimed in Claim 11 above, including as meters in addition to the speedometer (15A and B): a tachometer (17A and B); battery meter (19A and B); oil (21A and B); temperature (23A and B) and fuel (25A and B) guages together with sender units therefor.

0077126

1/4

Fig.1.

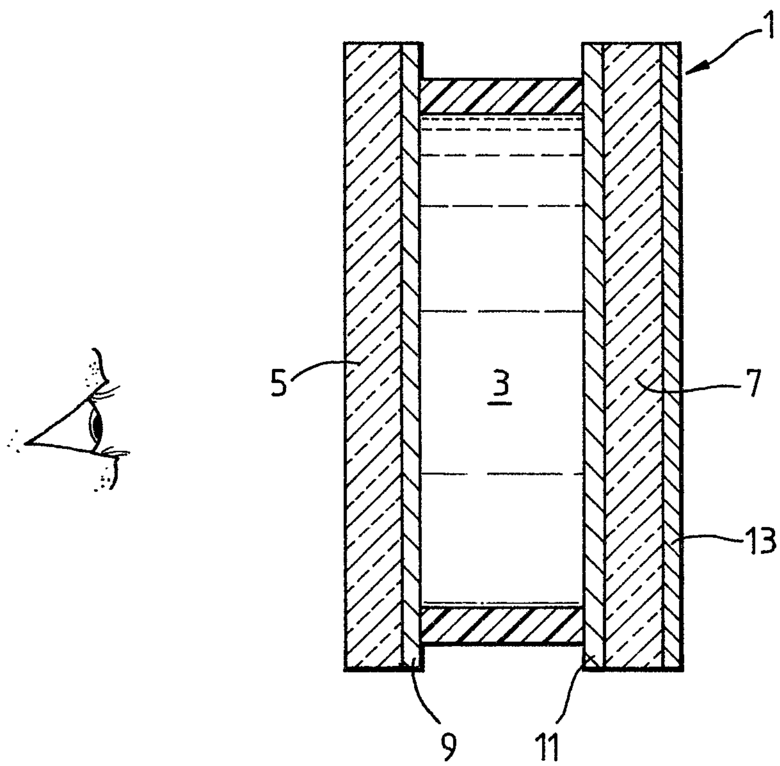

Fig.2.

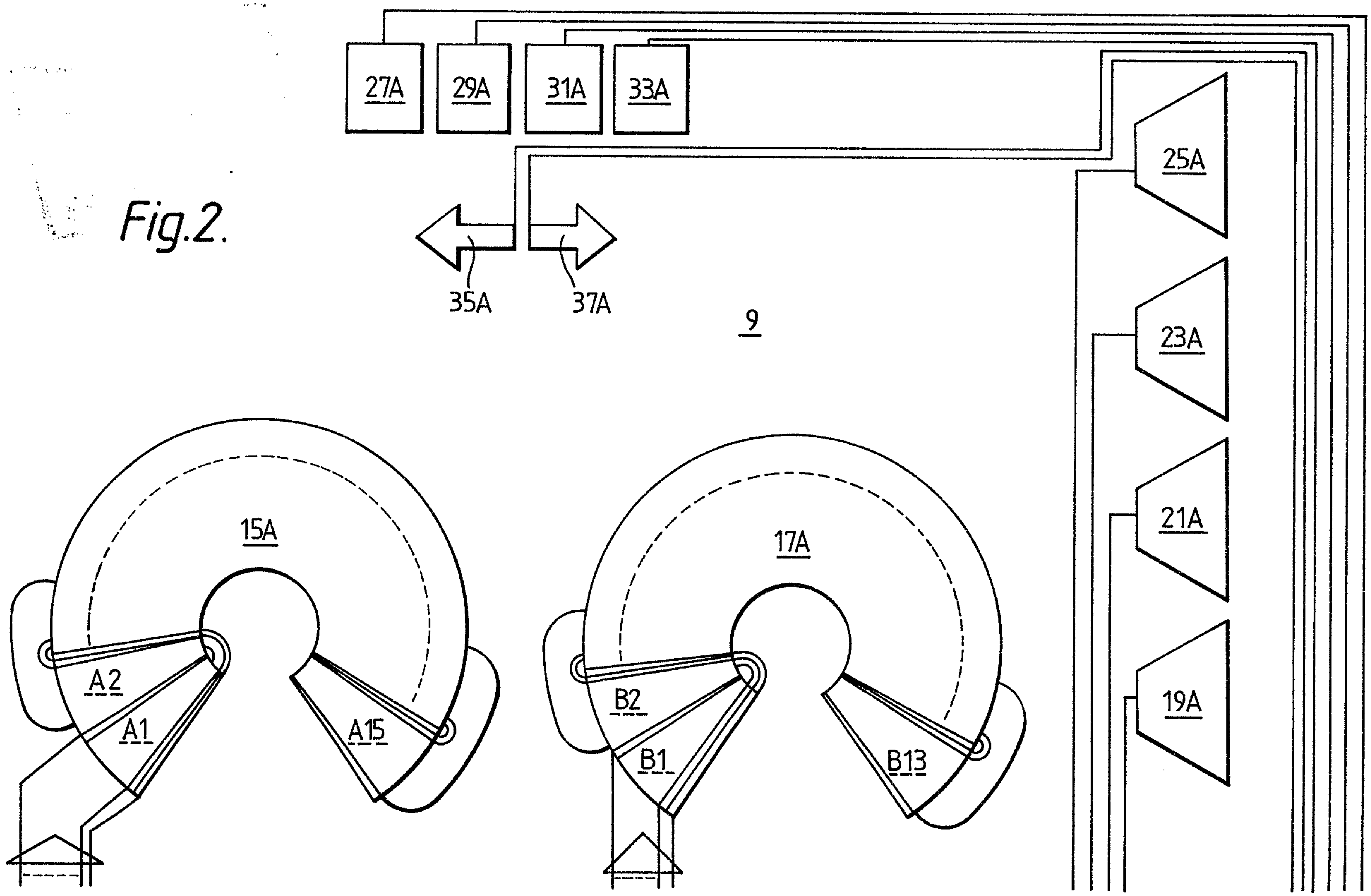

27A
29A
31A
33A
25A
23A
21A
19A
35A
37A
9
15A
A2
A1
A15
17A
B2
B1
B13

0077126

3/4

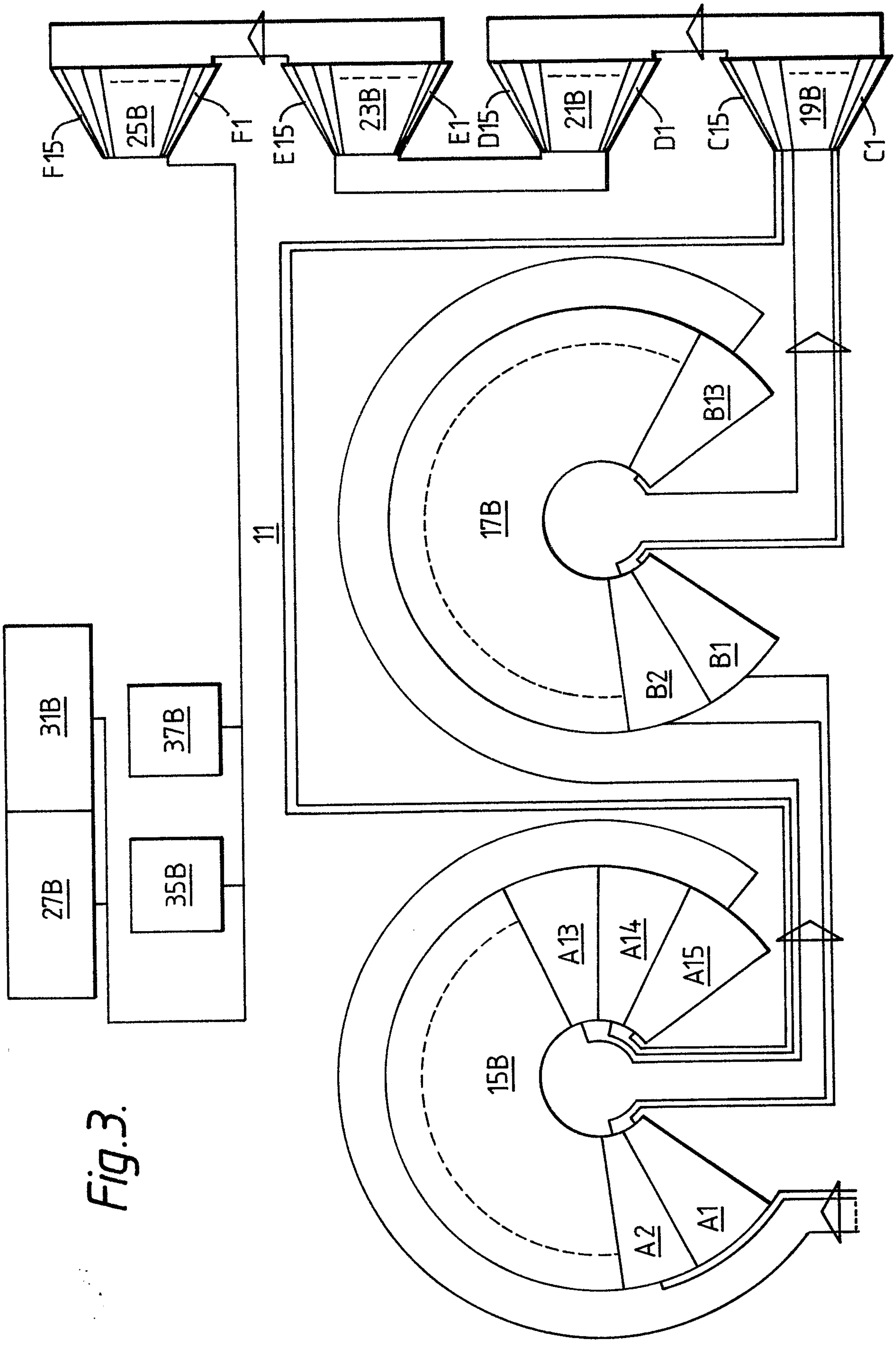


Fig.3.

0077126

4/4

Fig.4.